# EUROPEAN PATENT APPLICATION

(11) **EP 3 643 599 A1**
(43) Date of publication of application: **29.04.2020**
(21) Application number: 19205410.4
(22) Date of filing: 25.10.2019
(51) Int. Cl.: B64C 1/06, B64C 3/18, B64F 5/00, B29D 99/00, B29C 70/22, B64C 23/06

(54) **PRIMARY STRUCTURAL ELEMENT**

(30) Priority: 26.10.2018 GB 201817493
(71) Applicant: Airbus Operations Limited, Bristol BS34 7PA (GB)
(72) Inventor: WILLIAMS, Geoffrey, Bristol, BS34 7PA (GB); HEALEY, Daren, Bristol, BS34 7PA (GB); SALISBURY, Ross, Bristol, BS34 7PA (GB); PEACOCK, Antony C, Bristol, BS34 7PA (GB)
(74) Representative: EIP

(57) **Abstract**

Disclosed is an elongate primary structural element (200), such as a spar or rib, for a primary structure (22) of an aircraft aerodynamic structure (20), such as a wing. The primary structural element (200) has a shear web (210) comprising a twist (211) about a longitudinal axis of the shear web (210) so that a face (220) of at least a portion of the shear web (210) is non-planar when the shear web (210) is free from a torque applied about the longitudinal axis.

## Description

### TECHNICAL FIELD

The present invention relates to primary structural elements for primary structures of aircraft aerodynamic structures, to primary structures for aircraft aerodynamic structures, to aircraft, and to methods of manufacturing primary structural elements for primary structures of aircraft aerodynamic structures.

### BACKGROUND

In known aircraft wings and some other aircraft aerodynamic structures, spars are positioned so that planar datum faces of their shear webs are vertical, or near vertical, when the aircraft is stationary on the ground. By "near vertical" it is meant within +/- 10 degrees to true vertical. Manufacture of such spars generally involves machining material, such as a metal or metal alloy, from billet, skimming one side so that it becomes the planar datum face, turning over the resultant product, and then machining any required features into the opposite side. The planar datum face is positioned vertically, or near vertically, to allow jig datums to be easily managed and angles to be easily calculated, with the result that the spar acquires a shape dictating that its shear web is to be aligned vertically, or near vertically, when incorporated into the aircraft aerodynamic structure. Such alignment of the shear web also helps the spar to handle air loads and resist buckling in use.

Such a shape of a spar has inherent limitations. For example, the topography of an external cover of the aircraft aerodynamic structure often results in the creation of acute or enclosed angles between the shear web and the cover. This can make access to fixation devices for fixing a flange of the spar to the cover difficult, or can require that the flange (and any associated brackets) be extended to ease access to such fixation devices, with an associated increase in weight. Moreover, such vertical, or near vertical, alignment can result in a spar not being optimally arranged to resist compression of the aircraft aerodynamic structure by air loads.

It would be advantageous to provide spars and other primary structural elements that address one or more of the above issues.

### SUMMARY

A first aspect of the present invention provides an elongate primary structural element for a primary structure of an aircraft aerodynamic structure, wherein the primary structural element has a shear web comprising a twist about a longitudinal axis of the shear web so that a face of at least a portion of the shear web is non-planar when the shear web is free from a torque applied about the longitudinal axis.

As used herein, the term "aircraft aerodynamic structure" covers a wing, a wingtip device, and a stabiliser. A wingtip device may, for example, be a wing tip fence or a winglet. Such a winglet may be for attachment to a lower, pressure side of a wing, or for attachment to an upper, suction side of a wing. A stabiliser may, for example, be a horizontal stabiliser, also known as a tailplane, or a vertical stabiliser, also known as a fin. The aircraft aerodynamic structure may have one or more covers or skins that define an outer surface of the aircraft aerodynamic structure.

As used herein, the term "primary structure" means a part of an aircraft aerodynamic structure that bears flight loads. A primary structure may comprise one or more spars and one or more ribs attached to the spar(s) for giving form to the primary structure. The spar(s) in a wing run spanwise from a fuselage of an aircraft for carrying flight loads.

As used herein, the term "primary structural element" covers a spar or a rib of a primary structure. The primary structural element may, in use, be a load-bearing component or may give form to the primary structure. A spar may be a main spar, a front spar, or a rear spar, for example. A spar may, for example, have a "C" or "I" or "Z"-shaped cross section, or a mirror image thereof, and may be a unitary component or fabricated from plural parts. A rib may incorporate an aerofoil shape of a primary structure.

As used herein, the term "twist" means that a cross-sectional shape of a first section of the shear web is rotationally offset from a cross-sectional shape of a second section of the shear web about the longitudinal axis of the shear web.

Optionally, the shear web comprises plural twists about the longitudinal axis.

Optionally, the or each twist is a regular twist. Optionally, the or each twist is an irregular twist.

Herein, the term "irregular twist" means that a rate of rotational offset with distance along the axis is non-uniform or not consistent.

Optionally, the primary structural element is non-preloaded.

Optionally, the axis is straight. Optionally, the axis is non-linear in two dimensions or in three dimensions.

Optionally, the primary structural element is a spar. Optionally, the primary structural element is a rib.

Optionally, the primary structural element comprises a composite material.

Optionally, the primary structural element has a flange protruding from the portion of the shear web, wherein the flange is for aligning with or abutting a cover, and wherein an angle between the flange and the portion of the shear web is between 80 and 100 degrees. Optionally, the angle is between 85 and 95 degrees. Further optionally, the angle is about 90 degrees.

A second aspect of the present invention provides a primary structure for an aircraft aerodynamic structure, wherein the primary structure comprises at least one primary structural element according to the first aspect of the present invention.

A third aspect of the present invention provides a primary structure for an aircraft aerodynamic structure, wherein the primary structure comprises at least one elongate primary structural element, and wherein the or each primary structural element has a shear web comprising an irregular twist about a longitudinal axis of the shear web so that a face of at least a portion of the shear web is non-planar.

A fourth aspect of the present invention provides an aircraft aerodynamic structure comprising at least one cover, wherein the aircraft aerodynamic structure comprises at least one primary structural element according to the first aspect of the present invention, or a primary structure according to the second or third aspect of the present invention, connected to the at least one cover.

Optionally, the or each primary structural element is non-unitary with the at least one cover. Alternatively, the or each primary structural element is unitary with the at least one cover.

Optionally, the at least one cover comprises an upper cover and a lower cover. Further optionally, a first angle between the portion of the shear web and the upper cover is equal to a second angle between the portion of the shear web and the lower cover or differs from the second angle by no more than 10 degrees, and further optionally by no more than 5 degrees.

Optionally, the first angle is between 80 and 100 degrees, and further optionally between 85 and 95 degrees.

Optionally, the second angle is between 80 and 100 degrees, and further optionally between 85 and 95 degrees.

Optionally, the aircraft aerodynamic structure is one of: a wing, a wingtip device, and a stabiliser.

A fifth aspect of the present invention provides a method of manufacturing an elongate primary structural element for a primary structure of an aircraft aerodynamic structure, the method comprising: forming a shear web comprising a twist, without applying a torque to the shear web, so that a face of at least a portion of the shear web is non-planar.

Optionally, the forming comprises providing the primary structural element with a flange protruding from the portion of the shear web, wherein the flange is for aligning with or abutting a cover, and wherein an angle between the flange and the portion of the shear web is between 80 and 100 degrees. Optionally, the angle is between 85 and 95 degrees. Further optionally, the angle is about 90 degrees.

Optionally, the forming comprises laying up at least one fibre layup.

A sixth aspect of the present invention provides a primary structural element for a primary structure of an aircraft aerodynamic structure, wherein the primary structural element is substantially free of built-in stress and has a shear web having a cross-sectional shape, and wherein the cross-sectional shape of the shear web at a first section of the primary structural element is rotationally offset from the cross-sectional shape of the shear web at a second section of the primary structural element so that a face of at least a portion of the shear web is non-planar.

A seventh aspect of the present invention provides an aircraft comprising at least one aircraft aerodynamic structure according to the fourth aspect of the present invention or comprising at least one primary structural element according to the first or sixth aspect of the present invention.

### BRIEF DESCRIPTION OF THE DRAWINGS

Embodiments of the invention will now be described, by way of example only, with reference to the accompanying drawings, in which:
Figure 1 shows a schematic front view of an example of an aircraft;
Figure 2 shows a schematic plan view of a primary structure of a wing of the aircraft of Figure 1;
Figure 3 shows a schematic plan view of an example of a primary structural element before incorporation into the primary structure of Figure 2;
Figures 4(i) to 4(iv) show schematic cross-sectional end views of the primary structural element of Figure 3 taken along the lines I-I, II-II, III-III and IV-IV, respectively, in Figure 3;
Figure 5 shows a schematic cross-sectional end view of a comparative primary structural element;
Figure 6 shows a schematic cross-sectional end view of an example of a primary structural element;
Figures 7(i) to 7(iii) show schematic cross-sectional end views of an example of an aircraft aerodynamic structure;
Figures 8(i) to 8(iii) show schematic cross-sectional end views of a comparative aircraft aerodynamic structure; and
Figure 9 shows a flow diagram showing an example of a method of manufacturing a primary structural element.

### DETAILED DESCRIPTION

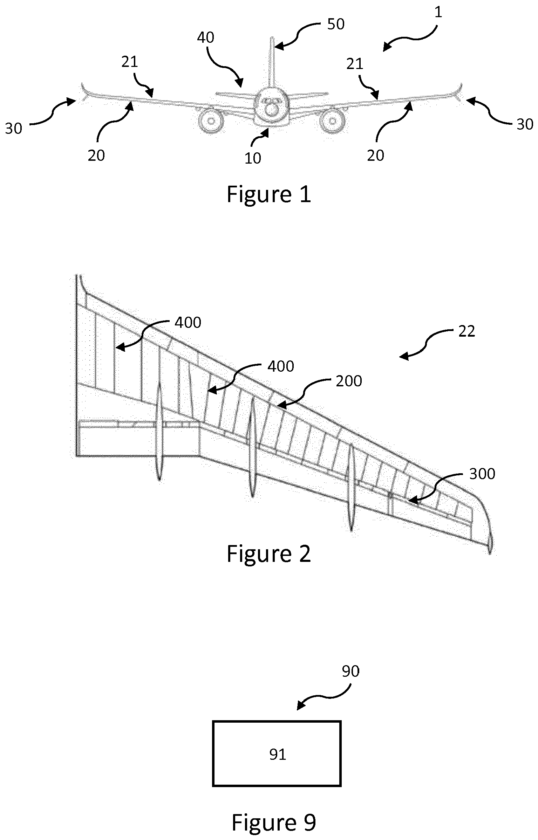

Referring to Figure 1, there is shown a schematic front view of an example of an aircraft according to an embodiment of the invention. The aircraft 1 comprises a fuselage 10, wings 20 running spanwise from the fuselage 10, and winglets 30 at the tips of the wings 20. In this embodiment, each of the winglets 30 is attached to a lower, pressure side of the associated wing 20, but in other embodiments this may not be the case. For example, in some embodiments the winglets 30 are attached to the upper, suction sides of the wings 20, or are in the form of wing tip fences attached to the distal ends of the wings 20. The aircraft 1 also comprises a tail, or empennage, that comprises a horizontal stabiliser or tailplane 40, and a vertical stabiliser or fin 50.

As noted elsewhere herein, each of the wings 20, the winglets 30, the horizontal stabiliser 40 and the vertical stabiliser 50 is an example of an aircraft aerodynamic structure. In the discussion that follows, further detail is provided about one of the wings 20 of the aircraft 1. However, it will be appreciated that, in some embodiments, each of these other aircraft aerodynamic structures may also comprise an example of the invention. The skilled person would have no difficulty in implementing such alternative embodiments of the invention given the contents of the present application.

Each of the wings 20 comprises a primary structure 22, which bears flight loads in use, and one or more covers 21 connected to the primary structure 22. An outer surface of the wing 20 is defined by the cover(s) 21.

Referring to Figure 2, there is shown a schematic plan view of the primary structure 22 of one of the wings 20. In this embodiment, the primary structure 22 comprises two spars that run spanwise. These are a front spar 200 and a rear spar 300. In other embodiments, there may be more or fewer spars, such as front, centre and rear spars, or multiple spars. In some embodiments, there is only one spar, which is called the main spar. The primary structure 22 also comprises ribs 400 that are attached to the spars 200, 300 for giving form to the primary structure 22. For example, each of the ribs 400 in this embodiment has an aerofoil shape. Any number of ribs may be provided in other embodiments. In some embodiments, each of the ribs 400 meets each of the spars 200, 300 substantially at a right angle, but this need not be true in other embodiments. Each of the spars 200, 300 and ribs 400 is an example of a primary structural element of the primary structure 22.

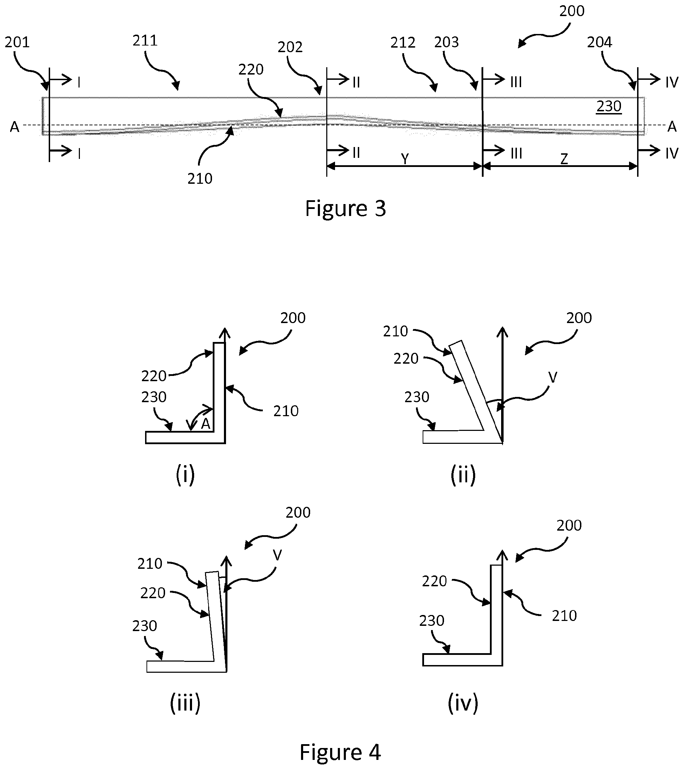

The front spar 200 has a shear web 210 comprising a twist about a longitudinal axis of the shear web 210. Although not readily visible in Figure 2, this will now be described in more detail with reference to Figures 3 and 4. In the discussion that follows, further detail is provided about the front spar 200. However, it will be appreciated that, in some embodiments, the invention may be implemented in a different spar, such as a rear spar or centre spar, or may be implemented in plural spars. Moreover, the invention may be implemented in a rib or plural ribs. The skilled person would have no difficulty in implementing such alternative embodiments of the invention given the contents of the present application.

Figures 3 and 4 show a schematic plan view and schematic cross-sectional end views, respectively, of the front spar 200 before the front spar 200 has been incorporated into the primary structure 22. Accordingly, the spar 200 is illustrated in isolation. The views in Figures 4(i) to 4(iv) are taken along the lines I-I, II-II, III-III and IV-IV, respectively, in Figure 3.

The spar 200 is elongate and comprises a shear web 210 with a longitudinal axis A-A, and a flange 230 protruding from the shear web 210. In the status shown in Figures 3 and 4, the spar 200 is free from any torque applied about that longitudinal axis A-A. That is, no torsional force is being applied to the spar 200, and specifically to the shear web 210. Indeed, the spar 200 is free, or substantially free, of any built-in stress or preloading. However, the shear web 210 nevertheless comprises a twist 211 about the longitudinal axis A-A. This means that, in this embodiment, a cross-sectional shape of the shear web 210 at a first section 201 of the spar 200 is rotationally offset from the cross-sectional shape of the shear web 210 at a second section 202 of the spar 200 that is a distance X along the axis A-A from the first section 201. This can be seen by comparing Figures 4(i) and 4(ii). Figure 4(i) shows the cross-sectional shape of the first section 201 of the spar 200 taken along the line I-I in Figure 3, whereas Figure 4(ii) shows the cross-sectional shape of the second section 202 of the spar 200 taken along the line II-II. It will be appreciated from these Figures that the angle V of the shear web 210 to the vertical increases over that first distance. As a result, a face 220 of at least a portion of the shear web 210 is non-planar. The significance of this feature will become apparent below. The face 220 may, in some embodiments, nevertheless still be flat and/or smooth.

Example methods of manufacture of the spar 200 are discussed in more detail below, but, in short, the method need not include application of any torsional force to the spar 200 or specifically to the shear web 210, or indeed building-in of any stress to the spar 200. Rather, the method may comprise forming the spar 200 so that the shear web 210 naturally has a shape including the twist 211, without actually twisting the shear web 210. This can simplify manufacture. The method could, for example, comprise laying up at least one fibre layup, so that the spar 200 comprises a composite material defining the twist.

In this embodiment, the shear web 210 actually comprises first and second twists 211, 212 about the longitudinal axis A-A. The first twist 211 was described above. The second twist 212 is an irregular twist. This means that the rate of rotational offset of the cross-sectional shape of the shear web 210 with distance along the axis A-A is non-uniform or not consistent. This can be seen by comparing Figures 4(ii), 4(iii) and 4(iv). Figure 4(iii) shows the cross-sectional shape of a third section 203 of the spar 200 taken along the line III-III in Figure 3 a distance Y along the axis A-A from the second section 202, and Figure 4(iv) shows the cross-sectional shape of a fourth section 204 of the spar 200 taken along the line IV-IV a distance Z along the axis A-A from the third section 203. The distances Y and Z are equal, yet it will be appreciated that the angle V of the shear web 210 to the vertical changes by a greater amount over distance Y than over distance Z. Again, this results in the face 220 of another portion of the shear web 210 being non-planar.

In this embodiment the shear web 210 comprises plural twists 211, 212 about the longitudinal axis A-A of the shear web 210. In other embodiments the primary structural element, such as a spar or rib, may have a shape comprising only a single twist about a longitudinal axis of the shear web. The single twist may be irregular, in that a rate of rotational offset of the cross-sectional shape of the shear web with distance along the axis is non-uniform or not consistent, or regular, in that the rate with distance along the axis is substantially uniform or consistent.

The location and degree of twist of a shear web may be dictated by how the primary structural element is to interact with other components in use. For example, a shear web of a primary structural element may comprise a twist such that the shear web will be substantially normal to one or two covers that follow a non-linear topography, so as to better resist compression loads in use. The degree of twist may be exaggerated in one or more regions of the primary structural element to increase space for other components, access, or maintenance.

As is apparent from at least Figure 4, the spar 200 of this embodiment has a flange 230 that protrudes from the shear web 210. The flange 230 is for aligning with, and optionally abutting, a cover of the aircraft aerodynamic structure (in this case, the wing 20) into which the primary structure 22 is to be incorporated. In this embodiment, the cover is a lower cover of the wing 20, but in other embodiments is may be an upper cover of the wing 20. This alignment or abutment enables the flange 230 to help support the cover and define the shape of the aircraft aerodynamic structure 20. One or more holes may be provided through the flange 230 for receiving fixation devices for fixing the spar 200 to the cover. In other embodiments, the primary structural element may have upper and lower flanges that protrude from opposite ends of the portion of the shear web, and those two flanges may be for respectively aligning with or abutting first and second covers of the aircraft aerodynamic structure into which the primary structural element is to be incorporated.

It will be seen in this embodiment that the flange 230 remains horizontal, or substantially horizontal, along the full length of the spar 200. However, in other embodiments, the flange may be offset from the horizontal along part or all of the length of the primary structural element. In some embodiments, the flange may comprise one or more twists about a longitudinal axis of the flange. The twist or twists in the flange may be independent of the twist or twists in the shear web. Alternatively, in some embodiments, the primary structural element (e.g. a spar) may comprise one or more twists that comprise both the shear web and the flange. Such twist(s) in the flange may enable the flange to help support the cover and to follow a tangent to an aerodynamic profile of the aircraft aerodynamic structure into which it is to be incorporated.

It is preferable for an angle A between the portion of the shear web 210 and the flange 230 to be between 80 and 100 degrees, more preferably between 85 and 95 degrees, and still more preferably between 88 and 92 degrees. Indeed, it is most preferable for this angle A to lie within this range along the full length of the primary structural element. In this embodiment, the angle is about 90 degrees at the first and fourth sections 201, 204 of the spar 200, as shown in Figures 4(i) and 4(iv). The angle A at the second and third sections 202, 203 of the spar 200, as shown in Figures 4(ii) and 4(iii), is an acute angle within this range (although exaggerated in the Figures). For example, at the second section 202 the angle A may be about 80 degrees, and at the third section 203 the angle A may be about 85 degrees. In other embodiments, other values for the angle A may be employed along part or all of the length of the primary structural element. Indeed, in some embodiments the angle A may be an obtuse angle along part or all of the length, although preferably it is not greater than 100 degrees and more preferably is not greater than 95 degrees. Depending on the profile of the aircraft aerodynamic structure into which the elongate primary structure will be incorporated, on the other side of the shear web 210 from the flange 230 an angle between the shear web 210 and a cover may be acute, obtuse, or approximately 90 degrees.

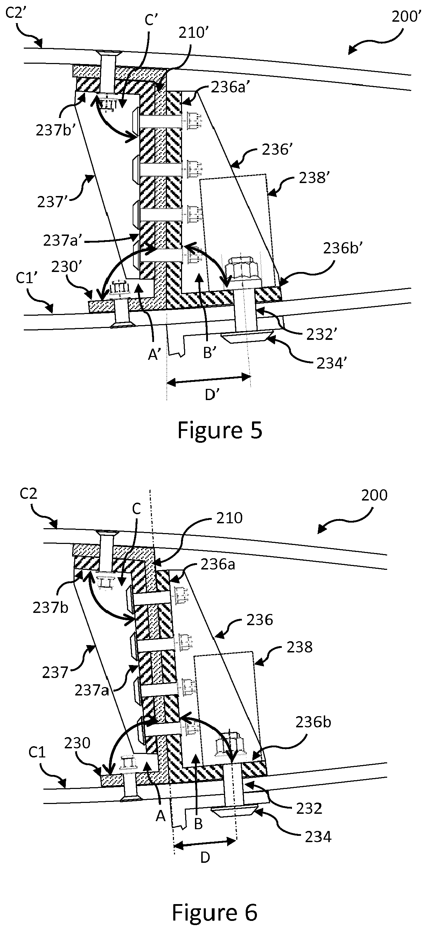

Providing the angle A within the above range and, most preferably close to or equal to 90 degrees, helps the shear web 210 to resist compression in use, such as by Brazier loads. Moreover, avoiding the angle A being severely acute can aid manufacture of the spar 200, particularly when the spar 200 is made by way of a process involving laying-up of at least one fibre layup. A further advantage will become apparent when an embodiment of the present invention is compared to a comparative example with reference to Figures 5 and 6.

Figure 6 shows a schematic cross-sectional end view of an example of a primary structural element according to an embodiment of the invention. On the other hand, Figure 5 shows a schematic cross-sectional end view of a primary structural element according to a comparative example.

In the embodiment of Figure 6, the primary structural element is a wing spar. In this embodiment, the spar 200 is a C-shaped spar with upper and lower flanges, but in other embodiments the spar could take a different form, such as any of the other forms discussed herein. An angle A between a portion of a shear web 210 and the lower flange 230 of the spar 200 is again about 90 degrees, but in other embodiments it could be anywhere between 80 and 100 degrees. On the other hand, in the comparative example of a spar 200' of Figure 5, an angle A' between a portion of a shear web 210' and a flange 230' of the spar 200' is about 105 degrees. In other comparative examples, this angle A' could be another angle greater than 100 degrees or less than 80 degrees.

In each of Figures 5 and 6, a lower cover bracket 236, 236' is provided to retain the angle A, A'. A first flange 236a, 236a' of the lower cover bracket 236, 236' is affixed by bolts to the shear web 210, 210' of the spar 200, 200', and a second flange 236b, 236b' of the lower cover bracket 236, 236' abuts a lower cover C1, C1' of an aircraft aerodynamic structure, such as a wing. In each of Figures 5 and 6, the lower cover bracket 236, 236' has a hole 232, 232' therethrough for receiving a fixation device 234, 234', such as a bolt, for fixing the spar 200, 200' to the lower cover C1, C1'.. The fixation device 234, 234' is tightened in use using a socket 238, 238' or another tool.

A supplementary angle B, B' of the angle A, A' is defined between the portion of the shear web 210, 210' and the lower cover C1, C1'. In the embodiment of Figure 6, the supplementary angle B is about 90 degrees, but in other embodiments it could be anywhere between 80 and 100 degrees. On the other hand, in the comparative example of Figure 5, the supplementary angle B' is about 75 degrees. In other comparative examples, this supplementary angle B' could be another angle less than 80 degrees or greater than 100 degrees.

In the comparative example of Figure 5, the shear web 210' and the first flange 236a' of the lower cover bracket 236' overhang the second flange 236b' of the lower cover bracket 236'. On the other hand, in the embodiment of Figure 6, the shear web 210 and the first flange 236a of the lower cover bracket 236 are substantially parallel to the axes of the hole 232 and the fixation device 234. This difference is a direct result of the difference in the supplementary angles B, B'. Therefore, the hole 232' in the comparative example has to be spaced further from the shear web 210' of the spar 200' than in the embodiment of Figure 6, in order to permit sufficient access for the socket 238' or another tool to be introduced onto a head of the fixation device 234', as will be understood by comparing the distances D and D' in Figures 5 and 6. This results in the second flange 236b' of the lower cover bracket 236' in the comparative example having to be longer in a direction extending from the first flange 236a' of the lower cover bracket 236', which in turn increases the weight of the lower cover bracket 236', increases off-set loads in use, and necessitates the use of larger fixation devices 234'. When there are several such lower cover brackets 236' spaced apart along a length of the spar 200', the cumulative increase in weight can be not insignificant. Therefore, embodiments of the present invention can result in a weight saving, which is valuable to support increased aircraft performance.

In each of Figures 5 and 6, it will be understood that the spar 200, 200' is non-unitary with the lower cover C1, C1'. Moreover, the spar 200, 200' is non-unitary with an upper cover C2, C2' of the aircraft aerodynamic structure. In each of Figures 5 and 6, an upper cover bracket 237, 237' is provided to retain an angle C, C' between the portion of the shear web 210 and the upper cover C2, C2'. A first flange 237a, 237a' of the upper cover bracket 237, 237' is affixed by bolts to the shear web 210, 210', and a second flange 237b, 237b' of the upper cover bracket 237, 237' abuts the upper flange of the spar 200, which in turn is aligned with and abuts the upper cover C2, C2'. In other embodiments, in which the upper flange is omitted, the second flange 237b, 237b' of the upper cover bracket 237, 237' may align with and abut the upper cover C2, C2'.

It is preferable in embodiments of the invention for the angle C between the portion of the shear web 210 and the upper cover C2 to be equal to the angle A between the portion of the shear web 210 and the lower cover C1, or at least for these angles A, C to differ from each other by no more than 10 degrees, and more preferably by no more than 5 degrees. This can enable the abovementioned weight saving resulting from the ability to shorten the second flange 236b of the lower cover bracket 236. Moreover, it can help improve structural optimisation and increase space available for other components, such as leading-edge systems and devices, and also improve access for inspection and maintenance.

It is advantageous for each of the angles A and C to be between 80 and 100 degrees, more preferably between 85 and 95 degrees, still more preferably between 88 and 92 degrees, and most preferably about 90 degrees. This helps the shear web 210, and the spar 200 as a whole, to resist compression in use, such as by Brazier loads that may be applied in opposing directions to the upper and lower covers C1, C2. Moreover, avoiding these angles A, C being severely acute can aid manufacture of the spar 200, particularly when the spar 200 is made by way of a process involving laying-up of at least one fibre layup, since it can be difficult to create a reliable acute angle with fibre layups. In turn, this can reduce the time required for manufacture, and thus the cost of manufacture.

In some other embodiments, the spar 200 or other primary structural element is unitary with one or both covers C1, C2. In some such embodiments, the flange 230 may be omitted.

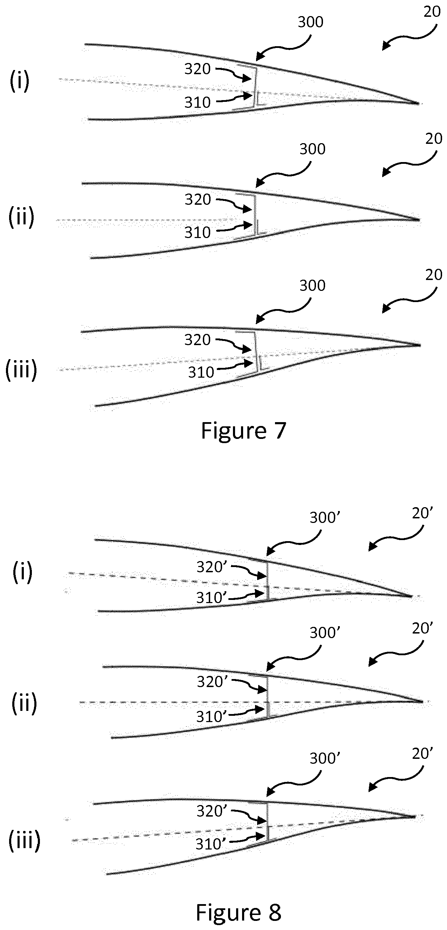

Figures 7(i) to 7(iii) show schematic cross-sectional end views of an example of an aircraft aerodynamic structure according to an embodiment of the invention. On the other hand, Figures 8(i) to 8(iii) show schematic cross-sectional end views of an aircraft aerodynamic structure of a comparative example.

In the embodiment of Figure 7, the aircraft aerodynamic structure 20 is a wing, and in particular Figures 7(i) to 7(iii) show schematic cross-sectional views through respective parts of the wing 20 that are spaced apart in a spanwise direction of the wing 20. In this embodiment, the aircraft aerodynamic structure 20 comprises a primary structural element in the form of a rear spar 300. The rear spar 300 is a C-shaped spar with upper and lower flanges, but in other embodiments the rear spar 300 could take a different form, such as any of the other forms discussed herein. The rear spar 300 has a shear web 310 comprising a twist about a generally-spanwise longitudinal axis of the shear web 310, so that a face 320 of at least a portion of the shear web 310 is non-planar when the shear web 310 is free from a torque applied about the longitudinal axis. That is, the rear spar 300, and particularly the shear web 310, is substantially free of built-in stress.

In the comparative example of Figure 8, the aircraft aerodynamic structure 20' is a wing, and again Figures 8(i) to 8(iii) show schematic cross-sectional views through respective parts of the wing 20' that are spaced apart in a spanwise direction of the wing 20'. In this construction, the aircraft aerodynamic structure 20' again comprises a primary structural element in the form of a C-shaped rear spar 300'. The rear spar 300' also has a shear web 310', but in contrast to Figure 7 the shear web 310' is not twisted about a generally-spanwise longitudinal axis of the shear web 310'. Instead, a face 320' of the shear web 310' is planar.

It will be seen that, as a result of this geometry, the shear web 310' of Figure 8 is angularly offset from normal to the upper and lower covers of the wing 20' along the length of the wing 20' or a major part thereof. In contrast, in Figure 7 the shear web 310 is normal, or closer to normal, to the topography of the upper and lower covers of the wing 20 along the length of the wing 20. This helps the shear web 310, and the spar 300 as a whole, to better resist compression in use, such as by Brazier loads that may be applied in opposing directions to the upper and lower covers.

Detailed discussion has been given of embodiments in which the primary structural element is a spar for a wing. However, in other embodiments, the primary structural element may be a rib for a wing, or a spar or rib for a wingtip device (such as a winglet) or a stabiliser (such as a horizontal stabiliser or a vertical stabiliser). The skilled person would have no difficulty in implementing such alternative embodiments of the invention given the contents of the present application.

A method of manufacturing an elongate primary structural element, such as a spar or rib, for a primary structure of an aircraft aerodynamic structure, such as a wing, will now be described with reference to Figure 9. The primary structural element may, for example, be any of those discussed herein, such as one of the spars 200, 300 or one of the ribs 400.

The method 90 comprises forming 91 a shear web comprising a twist, without applying a torque to the shear web, so that a face of at least a portion of the shear web is non-planar.

In some embodiments, the shear web comprises more than one twist. One or more of the twist(s) may be regular. One or more of the twist(s) may be irregular.

In some embodiments, the twist is about a longitudinal axis of the shear web, and the longitudinal axis is straight. In other embodiments, the longitudinal axis may be non-linear in two dimensions or in three dimensions.

In some embodiments, the forming 91 comprises forming the shear web without building-in stress to the shear web. That is, the shear web may be non-preloaded. This can simplify manufacture and make behaviour of the primary structural element more predictable.

In some embodiments, the forming 91 comprises providing the primary structural element with a flange protruding from the portion of the shear web, wherein the flange is for aligning with or abutting a cover, and wherein an angle between the flange and the portion of the shear web is between 80 and 100 degrees. In some embodiments, the angle is between 85 and 95 degrees, or between 88 and 92 degrees, such as 90 degrees. In some embodiments, two flanges may protrude from opposite ends of the portion of the shear web. In other embodiments, such as some of those in which the primary structural element is integrally formed with upper and/or lower covers, the flange(s) may be omitted.

In some embodiments, the primary structural element may comprise a composite material, such as carbon fibre reinforced plastic. The forming 91 may thus comprise laying up at least one fibre layup, such as on male or female tooling. The method may comprise laying up plural fibre layups and forming a unitary structure by a process comprising co-curing the plural fibre layups. At least one of the plural fibre layups may be for forming the shear web, and at least one of the plural fibre layups may be for forming a flange protruding from the shear web.

In some embodiments, the forming 91 comprises resin transfer moulding (RTM). Thus, in some embodiments, the forming 91 comprises infusing one or more layups with resin to create a single part that is then cured. In some embodiments, the process comprises same qualified resin transfer moulding (SQRTM). As will be understood by the skilled person, SQRTM is an RTM process in which each of the fibre layups comprises prepreg (i.e. a body of "pre-impregnated" composite fibres in which a thermoset polymer matrix material is present). Other materials may be used in other embodiments, such as dry fibre layups.

In other embodiments, the forming 91 may comprise machining material from a billet, or additive manufacturing (also known as three-dimensional (3D) printing).

In some embodiments, the forming 91 may comprise making one or more portions of the face of the shear web planar or near-planar, such as to facilitate fastening of devices or one or more other primary structural elements to the face.

It will therefore be appreciated that some embodiments of the present invention provide a primary structural element which, in use, can avoid or reduce the severity of an acute or enclosed angle between the primary structural element and a cover. This can facilitate access to fixation devices for fixing a flange of the primary structural element to the cover, and can enable the flange (and any associated brackets) to be reduced in size, with an associated reduction in weight. Some embodiments of the present invention provide a primary structural element which, in use, is better arranged to resist compression along the length of the primary structural element in use.

It is to noted that the term "or" as used herein is to be interpreted to mean "and/or", unless expressly stated otherwise.

The above described examples are to be understood as illustrative examples only. Any feature described in relation to any one example may be used alone, or in combination with other features described, and may also be used in combination with one or more features of any other of the examples, or any combination of any other of the examples. Furthermore, equivalents and modifications not described above may also be employed without departing from the scope of the invention, which is defined in the accompanying claims

## Claims

1. An elongate primary structural element for a primary structure of an aircraft aerodynamic structure, wherein the primary structural element has a shear web comprising a twist about a longitudinal axis of the shear web so that a face of at least a portion of the shear web is non-planar when the shear web is free from a torque applied about the longitudinal axis.

2. The primary structural element of claim 1, wherein the shear web comprises plural twists about the longitudinal axis.

3. The primary structural element of claim 1 or claim 2, wherein the or each twist is an irregular twist.

4. The primary structural element of any one of claims 1 to 3, wherein the primary structural element is a spar.

5. The primary structural element of any one of claims 1 to 4, wherein the primary structural element comprises a composite material.

6. The primary structural element of any one of claims 1 to 5, wherein the primary structural element has a flange protruding from the portion of the shear web, wherein the flange is for aligning with or abutting a cover, and wherein an angle between the flange and the portion of the shear web is between 80 and 100 degrees.

7. A primary structure for an aircraft aerodynamic structure, wherein the primary structure comprises at least one primary structural element according to any one of claims 1 to 6.

8. A primary structure for an aircraft aerodynamic structure, wherein the primary structure comprises at least one elongate primary structural element, and wherein the or each primary structural element has a shear web comprising an irregular twist about a longitudinal axis of the shear web so that a face of at least a portion of the shear web is non-planar.

9. An aircraft aerodynamic structure comprising at least one cover, wherein the aircraft aerodynamic structure comprises at least one primary structural element according to any one of claims 1 to 6, or a primary structure according to claim 7 or claim 8, connected to the at least one cover.

10. The aircraft aerodynamic structure of claim 9, wherein the or each primary structural element is non-unitary with the at least one cover.

11. The aircraft aerodynamic structure of claim 9 or claim 10, wherein the at least one cover comprises an upper cover and a lower cover; and
wherein a first angle between the portion of the shear web and the upper cover either:
is equal to a second angle between the portion of the shear web and the lower cover, or
differs from the second angle by no more than 10 degrees.

12. The aircraft aerodynamic structure of claim 11, wherein the first angle is between 80 and 100 degrees, and wherein the second angle is between 80 and 100 degrees.

13. The aircraft aerodynamic structure of any one of claims 9 to 12, wherein the aircraft aerodynamic structure is one of: a wing, a wingtip device, and a stabiliser.

14. A method of manufacturing an elongate primary structural element for a primary structure of an aircraft aerodynamic structure, the method comprising:
forming a shear web comprising a twist, without applying a torque to the shear web, so that a face of at least a portion of the shear web is non-planar.

15. The method of claim 14, wherein the forming comprises laying up at least one fibre layup.

16. A primary structural element for a primary structure of an aircraft aerodynamic structure, wherein the primary structural element is substantially free of built-in stress and has a shear web having a cross-sectional shape, and wherein the cross-sectional shape of the shear web at a first section of the primary structural element is rotationally offset from the cross-sectional shape of the shear web at a second section of the primary structural element so that a face of at least a portion of the shear web is non-planar.

17. An aircraft comprising at least one aircraft aerodynamic structure according to any one of claims 9 to 13 or comprising at least one primary structural element according to any one of claims 1 to 6 and 16.
